# EUROPÄISCHE PATENTANMELDUNG

(11) **EP 4 703 603 A1**
(43) Veröffentlichungstag der Anmeldung: **04.03.2026**
(21) Anmeldenummer: 25178795.8
(22) Anmeldetag: 26.05.2025
(51) Int. Cl.: F16H 47/04

(54) **GETRIEBEANORDNUNG SOWIE KRAFTFAHRZEUG MIT EINER GETRIEBEANORDNUNG**

(30) Priorität: 27.08.2024 DE 102024124430
(71) Anmelder: Dziuba Gears GmbH, 78647 Trossingen (DE)
(72) Erfinder: REINHARD, Christoph, 86199 Augsburg (DE); BAUER, Josef, 85405 Nandlstadt (DE); HONZEK, Robert, 87647 Oberthingau (DE)
(74) Vertreter: Hentrich Patent- & Rechtsanwaltspartnerschaft mbB

(57) **Zusammenfassung**

Die Erfindung betrifft ein zweifach vorhandenes Leistungsverzweigungsgetriebe (30) mit einer Antriebswelle (12), mit einem ersten Zweig (16), der eine Planetengetriebeanordnung (18) mit zwei Sonnenrädern (Z1, Z1'), einem ersten Hohlrad (Z3) und einem Planetensteg (20) umfasst, auf dem Doppelplanetenräder (Z2, Z2') angeordnet sind, die mit den Sonnenrädern und mit dem ersten Hohlrad (Z3) kämmen, wobei eines der Sonnenräder (Z1) mit der Antriebswelle (12) gekoppelt ist, mit einem verstellbaren zweiten Zweig (22), der teilweise über die Planetengetriebeanordnung (18) mit dem ersten Zweig (16) verbindbar ist und wenigstens zwei Hydroeinheiten (H1, H2) umfasst, die miteinander energetisch koppelbar und in jeweils beide Richtungen als Motor oder Pumpe betreibbar sind, und mit einer Abtriebswelle (24), welche über den ersten Zweig (16) und den zweiten Zweig (22) mit der Antriebswelle (12) koppelbar ist, wobei der Planetengetriebeanordnung (18) ein Planetenwendegetriebe (15) zugeordnet ist, durch das die Drehrichtung des ersten Zweiges (16) umkehrbar ist.

## Beschreibung

Die Erfindung betrifft eine Getriebeanordnung für ein Kraftfahrzeug, die ein Leistungsverzweigungsgetriebe umfasst, wobei das Leistungsverzweigungsgetriebe ausgestattet ist
- mit einer Antriebswelle,
- mit einem ersten, mechanischen Zweig, der eine Planetengetriebeanordnung mit zumindest einem ersten Sonnenrad und einem zweiten Sonnenrad, einem ersten Hohlrad und einem Planetensteg umfasst, auf dem Doppelplanetenräder angeordnet sind, die mit den Sonnenrädern und mit dem ersten Hohlrad kämmen, wobei zumindest eines der Sonnenräder mit der Antriebswelle gekoppelt ist,
- mit einem stufenlos verstellbaren zweiten Zweig, der zumindest teilweise über die Planetengetriebeanordnung mit dem ersten, mechanischen Zweig verbindbar ist und wenigstens zwei verstellbare Hydroeinheiten umfasst, die miteinander energetisch koppelbar und in jeweils beide Richtungen als Motor oder Pumpe betreibbar sind, wobei die erste Hydroeinheit über ein Hydroeinheit-Zahnrad und ein Außenkranzzahnrad an einem Außenkranz des Hohlrades mit diesem Hohlrad gekoppelt ist,
- mit einer Summierwelle, durch die die Kraft des ersten, mechanischen Zweiges und des zweiten Zweiges koppelbar ist, wobei der Planetengetriebeanordnung ein Planetenwendegetriebe zugeordnet ist, durch das die Drehrichtung des ersten, mechanischen Zweiges umkehrbar ist,
wobei das Leistungsverzweigungsgetriebe zweifach vorhanden ist als ein erstes Leistungsverzweigungsgetriebe und als ein zweites Leistungsverzweigungsgetriebe, wobei jedes Leistungsverzweigungsgetriebe separat ansteuerbar ist, und durch jedes der Leistungsverzweigungsgetriebe die Kraft von der Summierwelle auf ein dem jeweiligen Leistungsverzweigungsgetriebe zugeordnetes Antriebsrad übertragbar ist. Des Weiteren betrifft die Erfindung ein Kraftfahrzeug mit einer entsprechenden Getriebeanordnung.

Bei dem Einsatz von Verbrennungsmotoren in Kraftfahrzeugen ist es erforderlich, diese mit Getrieben zu koppeln, um die Verbrennungsmotoren auch für einen großen Geschwindigkeitsbereich in ihren günstigen Betriebspunkten betreiben zu können. Beispielhaft kann diesbezüglich auf Traktoren für den landwirtschaftlichen Betrieb verwiesen werden, bei denen für den Anwendungsfall der Pflanzung per Hand die Geschwindigkeit auf dem Feld zum Teil nur 0,4 km/h erreichen darf, während für den Transfer zwischen dem Feld und dem landwirtschaftlichen Betrieb Geschwindigkeiten von 60 km/h oder höher gewünscht sind. Bei Getrieben mit einer gegebenen Anzahl von Gängen ist der Betrieb des Motors in seinem optimalen Bereich nicht durchgehend gewährleistet, sodass sehr früh das Bedürfnis aufkam, eine kontinuierliche Änderung des Übersetzungsverhältnisses zu erzielen, um eine Fahrzeuggeschwindigkeit unabhängig von der Motordrehzahl anbieten zu können.

In der WO 2006/042434 A1 ist dafür ein Leistungsverzweigungsgetriebe offenbart, dass für die Verwendung in landwirtschaftlichen Fahrzeugen geeignet ist, wobei zwischen der mit dem Verbrennungsmotor gekoppelten Antriebswelle und einer Abtriebswelle ein Stufenplanetengetriebe zur Aufteilung der an der Antriebswelle anstehenden Leistung auf einen mechanischen Leistungszweig und einen hydraulischen Leistungszweig vorgesehen ist. Der hydraulische Leistungszweig ist durch zwei hydraulisch miteinander in Verbindung stehende, gleichartige hydrostatische Axialkolbenmaschinen gebildet, welche wahlweise als Pumpe oder Motor betreibbar und in einem vorgegebenen Schwenkwinkelbereich verschwenkbar sind. Die beiden hydrostatischen Axialkolbenmaschinen sind als Hydroeinheiten zur Abdeckung unterschiedlicher Fahrbereiche beziehungsweise Fahrstufen jeweils über zwei Kupplungen auf unterschiedliche Weise mit der Antriebswelle bzw. dem Stufenplanetengetriebe verbindbar. Die beiden Hydroeinheiten sind als Weitwinkelhydrostaten ausgestaltet.

Diese Druckschrift kann als Referenz für die Kenntnisse des Durchschnittsfachmannes herangezogen werden, da in dieser Druckschrift detailliert die Funktionsweise des Leistungsverzweigungsgetriebes sowie der darin eingesetzten Weitwinkelhydrostaten erläutert ist.

Als nachteilig zeigt sich bei diesem Leistungsverzweigungsgetriebe allerdings, dass die Rückwärtsfahrt einen schlechten Wirkungsgrad aufweist. In der WO 2016/102572 A1 ist daher zwischen der Antriebswelle und der Abtriebswelle eine Reversierstufe zum Wechseln zwischen einem Vorwärts-Fahrbereich und einem Rückwärts-Fahrbereich vorgesehen, wobei die Reversierstufe die Drehrichtungen der Sonnenräder des Hohlrads und der Stegwelle der Planetengetriebeanordnung beim Wechseln zwischen dem Vorwärts-Fahrbereich und dem Rückwärts-Fahrbereich entweder alle umkehrt oder alle konstant hält. Beim Wechseln zwischen Vorwärts-Fahrbereich und Rückwärts-Fahrbereich werden also die relativen Drehrichtungen der Sonnenräder, des Hohlrads und der Stegwelle in einer Gleichsinnigkeit gehalten, sodass nicht Einzelkomponenten der Planetengetriebeanordnung reversiert werden, während andere Komponenten nicht reversiert werden, sodass ausgeschlossen ist, dass es beim Wechsel zwischen Vorwärts- und Rückwärts-Fahrbereich in der Planetengetriebeanordnung zu Drehrichtungsüberlagerungen kommt. Die Reversierstufe umfasst dabei zwischen einer Abtriebsseite der Planetengetriebeanordnung und der Abtriebswelle zwei Kupplungselemente, wobei im Vorwärts-Fahrbereich Drehmoment über das erste Kupplungselement und im Rückwärts-Fahrbereich Drehmoment über das zweite Kupplungselement übertragen wird.

Die EP 4 151 885 A1 offenbart ein im Oberbegriff des Anspruches 1 genanntes Leistungsverzweigungsgetriebe derselben Anmelderin wie bei der vorliegenden Erfindung. In dieser Druckschrift ist eine detaillierte Erläuterung des Aufbaus und der Funktionsweise des Leistungsverzweigungsgetriebes vorhanden, die die vorliegende Offenbarung unterstützen kann. Dieses Leistungsverzweigungsgetriebe ist gebildet mit einer Antriebswelle, mit einem ersten, mechanischen Zweig, der eine Planetengetriebeanordnung mit zumindest zwei Sonnenrädern, einem ersten Hohlrad und einem Planetensteg umfasst, auf dem Doppelplanetenräder angeordnet sind, die mit den Sonnenrädern und mit dem ersten Hohlrad kämmen, wobei zumindest eines der Sonnenräder mit der Antriebswelle gekoppelt ist, mit einem stufenlos verstellbaren zweiten Zweig, der zumindest teilweise über die Planetengetriebeanordnung mit dem ersten, mechanischen Zweig verbindbar ist und wenigstens zwei verstellbare Hydroeinheiten umfasst, die miteinander energetisch koppelbar und in jeweils beide Richtungen als Motor oder Pumpe betreibbar sind, und mit einer Abtriebswelle, welche über den ersten, mechanischen Zweig und den zweiten Zweig mit der Antriebswelle koppelbar ist, wobei der Planetengetriebeanordnung ein Planetenwendegetriebe zugeordnet ist, durch das die Drehrichtung des ersten, mechanischen Zweiges umkehrbar ist. Dieses Leistungsverzweigungsgetriebe verfügt über sehr vorteilhafte Eigenschaften, insbesondere da die Drehrichtung der Komponenten der Planetengetriebeanordnung sowohl für den Vorwärtsfahrbereich als auch den Rückwärtsfahrbereich beibehalten bleibt und das Planetenwendegetriebe genutzt wird, um die Drehrichtung der Planetengetriebeanordnung beim Fahrtrichtungswechsel umzukehren, so dass die Abtriebswelle mit dem richtigen Drehsinn angetrieben wird. Es ist nicht erforderlich Kupplungen einzusetzen, was die Komplexität reduziert und Bauraum einspart. Der Rückwärtsfahrbereich ist gleichwertig zum Vorwärtsfahrbereich, ohne dass Blindleistung anfällt. Von einer Summierwelle, zu der die Kraft des ersten Zweiges und des zweiten Zweiges zusammengeführt wird, kann über ein Differential die Kraft auf die Vorderachse und die Hinterachse verteilt werden.

Die aus dem Stand der Technik bekannten Getriebe sind meist sehr aufwendig. In einigen Fällen müssen insbesondere für den Einsatz bei Kettenfahrzeugen für die Lenkung zusätzliche Überlagerungsgetriebe verwendet werden. Des Weiteren beträgt die maximale Geschwindigkeit, die mit bekannten Getrieben für Kettenfahrzeugen erreicht werden kann, ca. 60 km/h.

Aufgabe der vorliegenden Erfindung ist es daher, eine Getriebeanordnung für ein Kraftfahrzeug, insbesondere ein Kettenfahrzeug, bereitzustellen, deren Aufbau vereinfacht ist und mit der höhere Geschwindigkeiten erreicht werden können.

Diese Aufgabe wird durch eine Getriebeanordnung mit den Merkmalen des Anspruchs 1 und durch ein Kraftfahrzeug mit den Merkmalen des Anspruchs 15 gelöst. Vorteilhafte Ausgestaltungen mit zweckmäßigen Weiterbildungen der Erfindung sind in den abhängigen Ansprüchen angegeben.

Die Getriebeanordnung der eingangs genannten ermöglicht, dass eine einfache und kompakte Getriebeanordnung bereitgestellt wird, mit der höhere Geschwindigkeiten erreicht werden können, die beispielhaft auch bis zu 100 km/h möglich sind. Aufgrund des einfachen Aufbaus und der Nutzung des Planetenwendegetriebes können für beide Leistungsverzweigungsgetriebe die gleichen Komponenten verwendet werden, sodass die Getriebeanordnung relativ günstig hergestellt werden kann, insbesondere da auf ein jedem Leistungsverzweigungsgetriebe zugeordnetes Differential verzichtet werden kann und sich dadurch die Komplexität auch reduziert.

Vorzugsweise sind das erste Leistungsverzweigungsgetriebe und das zweite Leistungsverzweigungsgetriebe jeweils einem Kettenantrieb zugeordnet. Es ist aber auch möglich, jegliche Art von Kraftfahrzeugen anzutreiben. Vorgesehen ist dabei, dass durch das erste Leistungsverzweigungsgetriebe eine erste Kette antreibbar ist, und dass durch das zweite Leistungsverzweigungsgetriebe eine zweite Kette antreibbar ist. Somit können mehrere Ketten separat durch das jeweilige Leistungsverzweigungsgetriebe angetrieben werden. Z.B kann das erste Leistungsverzweigungsgetriebe eine linke Kette eines Kettenfahrzeuges antrieben und das zweite Leistungsverzweigungsgetriebe eine rechte Kette eines Kettenfahrzeuges antreiben.

Bevorzugt ist weiterhin, wenn die Antriebswellen des ersten und des zweiten Leistungsverzweigungsgetriebes über einen Kegelradsatz mit drei Kegelrädern verbunden sind, wobei eines der Kegelräder über eine Motorantriebswelle mit einem Motor verbunden ist. Dadurch werden beide Leistungsverzweigungsgetriebe von einem Motor, insbesondere einem Verbrennungsmotor, angetrieben. Die Verbindung über den Kegelradsatz mit drei Kegelrädern ist eine besonders einfache und kompakte Lösung.

Die Nutzung des Kegelradsatzes mit drei Kegelrädern, von denen eines der Motorantriebswelle und jeweils eines den Antriebswellen der Leistungsverzweigungsgetrieben zugeordnet ist, bedingt, dass die Antriebswellen der Leistungsverzweigungsgetriebe einen unterschiedlichen Drehsinn aufweisen. Aus der Sicht der Sicht der beiden Leistungsverzweigungsgetriebe ist der Drehsinn allerdings gleich, so dass für die beiden Leistungsverzweigungsgetriebe auch identische Teile verwendet werden können.

Es ist daher vorgesehen, dass die Drehrichtung des ersten Leistungsverzweigungsgetriebes gegensinnig zur Drehrichtung des zweiten Leistungsverzweigungsgetriebes schaltbar ist. Somit kann der Drehsinn der Antriebswellen der Leistungsverzweigungsgetriebe einfach durch Schalten eines der Leistungsverzweigungsgetriebe umgekehrt werden, um für die Vorwärtsfahrt oder die Rückwärtsfahrt die richtige Drehrichtung für die Ketten zu erzielen.

In einer bevorzugten Ausführungsform der Erfindung ist weiterhin vorgesehen, dass die Drehrichtung des ersten und des zweiten Leistungsverzweigungsgetriebe durch Schalten der Planetenwendegetriebe umkehrbar ist, wobei jedes Planetenwendegetriebe eine axial verstellbare Schaltmuffe aufweist, die in einer ersten Axialstellung die Drehrichtung des Planetensteges direkt auf einen Wendeplaneten überträgt, der in dem ersten, mechanischen Zweig mit der Summierwelle kraftschlüssig verbunden ist, und die in einer zweiten Axialstellung gegenüber einem Getriebegehäuse des jeweiligen Leistungsverzweigungsgetriebes unmittelbar oder mittelbar gegen Verdrehung blockiert ist, sodass die Drehrichtung des Planetensteges in dieser Axialstellung gewendet wird und mit umgedrehten Drehsinn auf die Summierwelle wirkt, über die die Kraft des ersten mechanischen Zweiges und des zweiten hydrostatischen Zweiges zusammengeführt wird. Somit wird eine besonders einfache Umkehrung des Drehsinns realisiert, da durch die Verwendung des Planetenwendegetriebes auf zusätzliche Kupplungen verzichtet werden kann, sodass zusätzlich Bauraum einspart wird und die Komplexität des Getriebes reduziert wird. Somit liegt ein einfaches und kompaktes Leistungsverzweigungsgetriebe vor, bei dem der Rückwärtsfahrbereich gleichwertig zum Vorwärtsfahrbereich angetrieben wird, ohne das Blindleistung anfällt. Der Antrieb, insbesondere der Kettenantrieb erfolgt dabei über den Wendeplaneten, so dass gegenüber dem Stand der Technik weitere Zahnräder, die dort der Summierwelle zugeordnet und nachgeordnet sind, eingespart werden können.

Bevorzugt ist weiterhin, dass sich in einem Betriebsmodus, der einer Vorwärtsfahrt entspricht, die Schaltmuffe des ersten Leistungsverzweigungsgetriebes in der ersten Axialstellung befindet und die Schaltmuffe des zweiten Leistungsverzweigungsgetriebes in der zweiten Axialstellung befindet. Somit kann der Drehsinn steuerungstechnisch besonders einfach umgekehrt werden, indem die Axialstellung der Schaltmuffe verstellt wird.

Es ist ferner vorgesehen, dass sich die Antriebswellen des ersten und des zweiten Leistungsverzweigungsgetriebes bis zu dem zweiten Sonnenrad der Planetengetriebeanordnung erstrecken. Dadurch wird ein einfacher Aufbau realisiert, denn die Antriebswelle erstreckt sich nicht durch das Planetenwendegetriebe, sodass dabei keine Hohlwellen verwendet werden müssen, auf denen das Planetenwendegetriebe gelagert werden muss.

In einer Ausführungsform der Erfindung ist die Summierwelle durch einen Radsatz über eine mit einer Kupplung versehenen Koppelwelle mit dem zweiten Zweig koppelbar. Dies erlaubt ein einfaches Zusammenführen der Kraft aus dem ersten mechanischen Zweig und dem zweiten hydrostatischen Zweig. Dabei ist es vorteilhaft, wenn der Radsatz aus 3 Stirnrädern gebildet ist, da somit ein besonders einfacher Aufbau realisiert wird.

Vorzugsweise ist die Schaltmuffe als ein Wende-Hohlrad gebildet mit einem Wendeplaneten mit einer zugeordneten ungeraden Anzahl von Zahnrädern. Dadurch wird eine besonders einfache und kompakte Lösung zur Drehrichtungsumkehr bereitgestellt.

Ein Aspekt der Erfindung sieht vor, dass dem zweiten Zweig eine zweite Kupplung zugeordnet ist. Somit kann der zweite Zweig flexibler angesteuert werden.

Des Weiteren ist vorgesehen, dass die zweite Kupplung einer Hydrostatwelle der zweiten Hydroeinheit zugeordnet und als Doppelklauenkupplung ausgebildet ist zum Zusammenwirken der zweiten Hydroeinheit über ein ersten Zahnradvorgelege mit dem kleinen Sonnenrad in der ersten geschlossenen Stellung und zum Zusammenwirken über ein zweiten Zahnradvorgelege mit dem kleinen Sonnenrad in der zweiten geschlossenen Stellung. Somit kann in einfacher Weise der der zweite Zweig in einem Vorwärts-Fahrbereich und in einem Rückwärtsfahrbereich eingesetzt werden.

In einer Ausführungsform sind über die Motorantriebswelle Nebenaggregate antreibbar. Dies ermöglicht eine einfache Gestaltung des Nebenantriebes, da dieser nicht von den Antriebswellen oder den Summierwelle abgeführt werden muss.

Vorzugsweise weist das Planetenwendegetriebe ein Sonnenrad auf, das unmittelbar und drehfest mit der Summierwelle verbunden ist. Dies ermöglicht einen einfachen und kompakten Aufbau, da die Kraft direkt an der Summierwelle auf den Antrieb übertragen werden kann.

Die vorstehend genannten Vorteile und Wirkungen gelten sinngemäß auch für ein Kraftfahrzeug mit einer derartigen Getriebeanordnung.

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in der Figur nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigt:
Figur 1 eine schematische Darstellung einer erfindungsgemäßen Getriebeanordnung, und
Figur 2 eine geschwindigkeitsabhängige Darstellung des hydrostatischen Leistungsanteils (strichliert) sowie der Effizienz

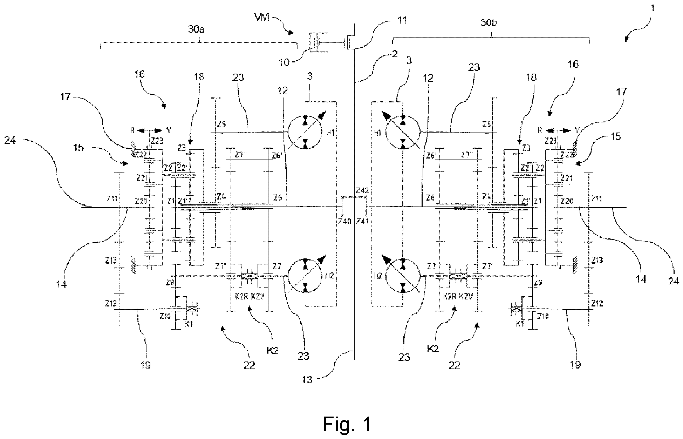

In Figur 1 ist eine schematische Darstellung einer Getriebeanordnung mit einem ersten Leistungsverzweigungsgetriebe 30a und einem zweiten Leistungsverzweigungsgetriebe 30b gezeigt. Das erste und das zweite Leistungsverzeigungsgetriebe 30a, 30b sind im Wesentlichen identisch aufgebaut, sodass im Folgenden die Funktion anhand des zweiten Leistungsverzweigungsgetriebes 30b erläutert wird.

Das Leistungsverzweigungsgetriebe 30b ist mit seiner Antriebswelle 12 mit einem Verbrennungsmotor VM gekoppelt, der durch einen mit einer Kurbelwelle 11 verbundenen Kolben 10 symbolisiert ist. Die Verbindung der Antriebswelle 12 mit dem Verbrennungsmotor VM kann dabei auch über einen nicht in der Zeichnung dargestellten Torsionsdämpfer und eine nicht dargestellte Gelenkwelle erfolgen.

Dabei ist die Antriebswelle 12 des zweiten Leistungsverzweigungsgetriebes 30b über einen Kegelradsatz mit einem ersten Kegelrad Z40, einem zweiten Kegelrad Z41und einem dritten Kegelrad Z42 mit dem Verbrennungsmotor VM verbunden, wobei das dritte Kegelrad Z42 mit einer Motorantriebswelle 2 verbunden ist. Das erste Kegelrad Z40 ist mit dem ersten Leistungsverzweigungsgetriebe 30a verbunden und das zweite Kegelrad Z41 ist mit dem zweiten Leistungsverzweigungsgetriebe 30b verbunden. Durch den gemeinsamen Antrieb mittels des dritten Kegelrades Z42 drehen sich das erste Kegelrad Z40 und das zweite Kegelrad Z41 mit entgegen gesetztem Drehsinn, während vom Getriebeeingang aus gesehen der gleiche Drehsinn vorliegt.

Die Motorantriebswelle 2 ist mit einer sich durch den Kegelradsatz Z40, Z41, Z42 hindurch erstreckenden Zapfwelle 13 verbunden, mit der weitere Komponenten angetrieben werden können. Wird beispielsweise das zweite Leistungsverzweigungsgetriebe 30b in einem als Traktor für den landwirtschaftlichen Betrieb ausgelegten Kraftfahrzeug eingesetzt, so kann über die Zapfenwelle 13 eine Pumpe für die Arbeitshydraulik und eine weitere Pumpe für die Lenkung angetrieben werden; das Antreiben anderer Aggregate ist gleichfalls möglich. Auch bei Baustellenfahrzeugen mit einem Kettenantrieb können so Zusatzaggregate angetrieben werden.

Das zweite Leistungsverzweigungsgetriebe 30b weist eine Planetengetriebeanordnung 18 auf mit einem großen ersten Sonnenrad Z1 und einen kleinen zweiten Sonnenrad Z1'. Die Antriebswelle 12 erstreckt sich dabei vom zweiten Kegelrad Z41 bis zum ersten Sonnenrad Z1 der Planetengetriebeanordnung 18.

Weiterhin liegen Doppelplanetenräder Z2 und Z2', ein erstes Hohlrad Z3 und ein Planetensteg P vor. Über diese Planetengetriebeanordnung 18 läuft ein erster, mechanischer Zweig 16, durch den von dem Verbrennungsmotor VM über die Motorantriebswelle 2, den Kegelradsatz Z40, Z41, Z42 und die Antriebswelle 12 bereitgestellte Leistung einer Summierwelle 14 und von dieser einem Kettenantrieb 24 zugeführt wird.

Als eine Besonderheit des ersten und des zweiten Leistungsverzweigungsgetriebes 30a, 30b ist dabei für einen einfachen Wechsel zwischen einem Vorwärts-Fahrbereich V und einem Rückwärts-Fahrbereich R ein Planetenwendegetriebe 15 abtriebsseitig der Planetengetriebeanordnung 18 vorgesehen. Durch dieses Planetenwendegetriebe 15 ist die Drehrichtung des ersten, mechanischen Zweiges 16 umkehrbar.

Das Planetenwendegetriebe 15 umfasst eine als ein Wende-Hohlrad gebildete, axial verstellbare Schaltmuffe Z23, die in einer ersten Axialstellung die Drehrichtung des Planetenstegs P direkt auf einen Wendeplaneten Z22, Z21, Z20 überträgt, der in dem ersten, mechanischen Zweig 16 mittels dem ersten Wendeplaneten Z20 unmittelbar mit der Summierwelle 14 kraftschlüssig verbunden ist.

In einer zweiten Axialstellung ist die Schaltmuffe Z23 gegenüber einem Getriebegehäuse 17 des zweiten Leistungsverzweigungsgetriebes 30b unmittelbar oder mittelbar gegen Verdrehung blockiert, sodass die Drehrichtung des Planetenstegs P in dieser Axialstellung gewendet wird und mit umgedrehtem Drehsinn auf die Summierwelle 14 wirkt. Für diesen Zweck weist die Schaltmuffe Z23 einen Wendeplaneten Z20, Z21, Z22 mit einer zugeordneten ungeraden Anzahl von Zahnrädern auf.

Das zweite Leistungsverzweigungsgetriebe 30b verfügt weiterhin über eine erste Hydroeinheit H1 und eine zweite Hydroeinheit H2, die einen hydraulischen, stufenlos verstellbaren zweiten Zweig 22 des zweiten Leistungsverzweigungsgetriebes 30b bilden. Die beiden Hydroeinheiten H1, H2 sind hydraulisch über Hochdruckkanäle 3 miteinander verbunden. Die Hydroeinheiten H1 und H2 sind durch Weitwinkelhydrostaten vom Schrägachsentyp gebildet, bei dem ein Zylinderblock mit darin befindlichen Kolben aus der Achse der zugeordneten Hydrostatwelle 23 heraus zu einer Seite um einen Schwenkwinkel verschwenkt werden kann. Der grundsätzliche Aufbau und die Funktionsweise der Weitwinkelhydrostaten ist in der WO 2006/042434 A1 beschrieben und daraus bekannt.

Werden bei einem konstanten Schwenkwinkel ungleich 0° die Hydrostatwelle 23 und damit über eine Synchronisierwelle auch der Zylinderblock um ihre jeweiligen Achsen gedreht, durchläuft jeder der Kolben pro Umdrehung einen vollständigen Hubzyklus.

Die erste Hydroeinheit H1 und/oder die zweite Hydroeinheit H2 kann dabei als hydraulische Pumpe arbeiten, wenn ein Antrieb über die Hydrostatwelle 23 erfolgt und ein hydraulisches Medium durch die aus der Zylinderbohrung herausfahrenden Kolben angesaugt und durch die in die Zylinderbohrung hineinfahrenden Kolben herausgedrückt wird. Die Pumpleistung in Volumen pro Umdrehung ist dabei umso größer, je größer der Schwenkwinkel ist. Die erste Hydroeinheit H1 und/oder die zweite Hydroeinheit H2 kann auch als hydraulischer Motor M arbeiten, wenn die Zylinder jeweils mit einem unter Druck stehenden hydraulischen Medium beaufschlagt werden und die entstehende Drehbewegung an der Hydrostatwelle 23 abgenommen wird. Das Drehmoment ist dabei umso größer, je größer der Schwenkwinkel ist. Über ein Außenkranzzahnrad Z4 am Außenkranz des Hohlrades Z3 und über ein Hydroeinheit-Zahnrad Z5 wirkt die Antriebswelle 12 auf die erste Hydroeinheit H1.

Die zweite Hydroeinheit H2 ist im Vorwärts-Fahrbereich V und im Rückwärts-Fahrbereich R der Stufe 1 über eine erste Kupplung K1 sowie Zahnräder Z9 und Z10 und über den Stirnradsatz Z12, Z13, Z11 mit der Summierwelle 14 gekoppelt.

In dem gezeigten Ausführungsbeispiel der Figur 1 ist die erste Kupplung K1 als eine der Koppelwelle 19 zugeordnete Klauenkupplung ausgebildet zum lösbaren Zusammenwirken mit einer Hydrostatwelle 23 der zweiten Hydroeinheit H2. Weiterhin ist die zweite Kupplung K2 der Hydrostatwelle 23 der zweiten Hydroeinheit H2 zugeordnet und als Doppelklauenkupplung K2V/K2R ausgebildet zum Zusammenwirken der zweiten Hydroeinheit H2 über ein erstes Zahnradvorgelege Z6, Z7 mit dem zweiten Sonnenrad Z1' in der ersten geschlossenen Stellung K2V, die dem Vorwärts-Fahrbereich V zugeordnet ist, und zum Zusammenwirken über ein zweites Zahnradvorgelege Z7', Z7", Z6', Z6 mit dem ersten Sonnenrad Z1' in der zweiten geschlossenen Stellung K2R, die dem Rückwärts-Fahrbereich R zugeordnet ist.

In dem gezeigten Ausführungsbeispiel der Figur 1 sind die Kupplungen K1 und K2V und K2R als Klauenkupplungen gebildet. Der Entfall von K2R ist grundsätzlich möglich, allerdings mit dem Verlust einer zweiten Stufe für den Rückwärts-Fahrbereich R verbunden.

Die zweite Hydroeinheit H2 ist also über die erste Kupplung K1 mit der Summierwelle 14 koppelbar und kann bei geöffneter erster Kupplung K1 mittels der zweiten Kupplung K2 über das erste Zahnradvorgelege Z6, Z7 oder das zweite Zahnradvorgelege Z7', Z7', Z6', Z6 'und dem kleinen zweiten Sonnenrad Z1' mit der Planetengetriebeanordnung 18 gekoppelt werden.

Nachfolgend werden die möglichen Betriebsweisen des ersten und des zweiten Leistungsverzweigungsgetriebes 30a, 30b mit dem vorstehend geschilderten Aufbau erläutert. Dabei wird zunächst die Funktionsweise der Leistungsverzweigungsgetriebe 30a,30b erläutert unter Berücksichtigung, dass der Drehsinn des ersten Kegelrades Z40 und des zweiten Kegelrades Z41 von Getriebeeingang gesehen gleich ist.

Eine mögliche Betriebsweise ist der aktive Stillstand, bei der die Summierwelle 14 und darüber der Kettenantrieb 24 blockiert werden und eine Art "Feststellbremse" vorliegt. Dazu ist die zweite Hydroeinheit H2 voll ausgeschwenkt, während die erste Hydroeinheit H1 einen Schwenkwinkel von 0° aufweist. Die erste Hydroeinheit H1 fungiert als Pumpe und die zweite Hydroeinheit H2 als Motor, sodass über die zweite Hydroeinheit H2 und die erste Kupplung K1 die gewünschte Blockade erreicht ist.

Im Folgenden wird der Vorwärts-Fahrbereich V erläutert, bei dem eines der Leistungsverzweigungsgetriebe30a,30b die Schaltmuffe Z23 in der einen Axialstellung und das andere Leistungsverzweigungsgetriebe die Schaltmuffe Z23 in der anderen Axialstellung aufweist, um den Drehsinn der Summierwellen anzugleichen. Initial, im Stillstand des die Leistungsverzweigungsgetriebe 30a,30b aufweisenden Kraftfahrzeuges, ist die zweite Hydroeinheit H2 voll ausgeschwenkt und die erste Hydroeinheit H1 weist einen Schwenkwinkel von 0° auf. Die erste Hydroeinheit H1 fungiert als Pumpe und die zweite Hydroeinheit H2 als Motor.

Beim Anfahren schwenkt die erste Hydroeinheit H1 von 0° in einen positiven Winkelbereich, in dem gezeigten Ausführungsbeispiel gegen den Uhrzeigersinn, bis zu ihrem maximalen Schwenkwinkel, der z.B. 45° beträgt. Die hydrostatische Leistung aus der ersten Hydroeinheit H1 wird der als Motor arbeitenden zweiten Hydroeinheit H2 zugeführt und über die erste Kupplung K1 auf die Summierwelle 14 geleitet, der über den ersten, mechanischen Zweig 16 direkt über den Planetensteg P und den Wendeplaneten Z20, Z21, Z22 gleichfalls eine Leistung mechanisch zugeführt wird.

Sobald die erste Hydroeinheit H1 ihren maximalen Schwenkwinkel erreicht hat, schwenkt die zweite Hydroeinheit H2 auf einen Schwenkwinkel von 0° zurück und damit kommt die erste Hydroeinheit H1 zum Stillstand.

Die Kupplungen K1 und K2 laufen synchron und sind lastlos, woraufhin die erste Kupplung K1 geöffnet und die zweite Kupplung K2 geschlossen wird. Dadurch ist die zweite Hydroeinheit H2 über das Zahnradvorgelege Z6, Z7 an das kleine zweite Sonnenrad Z1' der Planetengetriebeanordnung 18 gekoppelt.

Durch Weiterschwenken der zweiten Hydroeinheit H2 in die Gegenrichtung in einen negativen Winkelbereich wird die Anströmungsrichtung der Hydroeinheiten H1 und H2 gewechselt, sodass ein Wechsel in eine Stufe 2 des Vorwärts-Fahrbereiches V erfolgt, bei dem die zweite Hydroeinheit H2 als Pumpe arbeitet und die erste Hydroeinheit H1 antreibt. Die hydrostatische und die mechanische Leistung werden in der Planetengetriebeanordnung 18 zusammengeführt und die hydrostatisch übertragene Leistung nimmt zu. Ist die zweite Hydroeinheit H2 voll ausgeschwenkt, schwenkt die erste Hydroeinheit H1 auf 0° zurück, wodurch die zweite Hydroeinheit H2 nahezu stillsteht und die Kraftübertragung fast rein mechanisch über den ersten, mechanischen Zweig 16 verläuft.

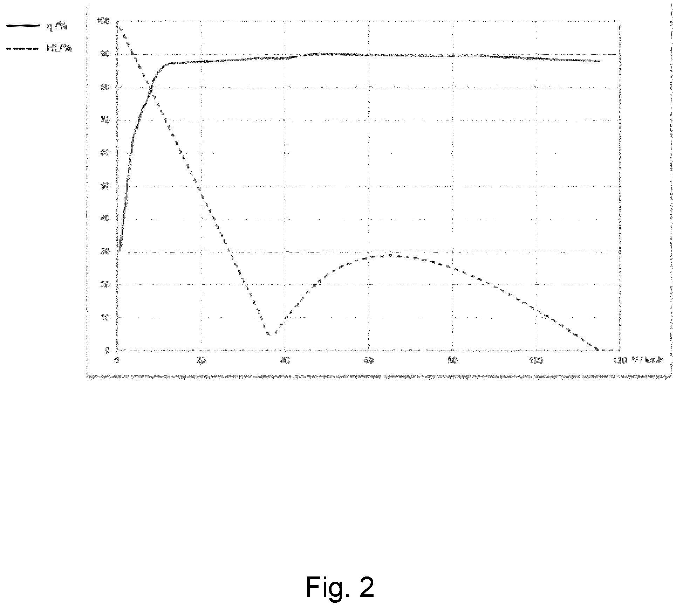

In der Figur 2 ist der hydrostatische Leistungsanteil HL in Abhängigkeit der Geschwindigkeit dargestellt. Es ist ersichtlich, dass beim Anfahren der hydrostatische Leistungsanteil HL bei 100 % liegt und dann nahezu linear auf 0 % abfällt, wobei dann das Umschalten von der ersten Stufe in die zweite Stufe des Vorwärts-Fahrbereiches V erfolgt, woraufhin der hydrostatische Leistungsanteil HL wieder zunimmt bis ca. 29 Prozent und nach diesem Maximum wieder abfällt, bis schließlich die Kraftübertragung rein mechanisch erfolgt.

Dargestellt in der Figur 2 ist auch der Wirkungsgrad η, der nahezu über den gesamten Geschwindigkeitsbereich auf hohem Niveau nahezu konstant verharrt.

Im Folgenden wird der Ablauf erläutert, wenn im Rückwärts-Fahrbereich R aus dem Stillstand angefahren wird. Für den Rückwärts-Fahrbereich R ist das Wende-Hohlrad als Schaltmuffe Z23 drehfest in der gegenüber den Vorwärts-Fahrbereich anderen Axialstellung gegenüber dem Getriebegehäuse 17 festgelegt, sodass die Drehrichtung des Planetenstegs P umgekehrt wird. Die zweite Hydroeinheit H2 arbeitet als Motor und ist voll ausgeschwenkt, während die erste Hydroeinheit H1 als Pumpe wirkt und aus der Ausgangsstellung 0° im Uhrzeigersinn bis -45° schwenkt. Durch die entgegengesetzte Schwenkrichtung der ersten Hydroeinheit H1 in den negativen Winkelbereich wird die Drehrichtung der zweiten Hydroeinheit H2 umgekehrt und über die erste Kupplung K1 mit dem entsprechenden Drehsinn der Summierwelle 14 zugeführt, die den mechanischen Leistungsanteil durch das Planetenwendegetriebe 15 gleichfalls mit dem gewendeten Drehsinn erhält.

Die Kraftflüsse verlaufen so, dass im Vorwärts-Fahrbereich V und im Rückwärts-Fahrbereich R das Zusammenführen der Leistungsanteile grundsätzlich gleich erfolgt.

Im Folgenden wird die Betriebsweise der Getriebeanordnung 1 speziell für den Antrieb eines Kettenfahrzeuges erläutert. Wird die Getriebeanordnung 1 für den Antrieb eines Kettenfahrzeuges verwendet, treibt das erste Leistungsverzweigungsgetriebe 30a z.B. eine erste Kette an, die z.B. als eine linke Kette eines Kettenfahrzeuges ausgebildet ist. Das zweite Leistungsverzweigungsgetriebe 30b treibt in diesem Ausführungsbeispiel dann eine zweite Kette an, die z.B. als eine rechte Kette eines Kettenfahrzeuges ausgebildet ist.

Somit ist das Leistungsverzweigungsgetriebe 30a, 30b, wie in Fig. 1 gezeigt zweifach vorhanden, wobei jedes Leistungsverzweigungsgetriebe 30a, 30b die Kraft von der Summierwelle 14 auf ein dem jeweiligen Leistungsverzweigungsgetriebe 30a, 30b zugeordnetes Antriebsrad eines Kettenantriebes 24 überträgt. Dabei sind die beide Hydroeinheiten H1, H2, die Kupplungen K1, K2 und die Verstellung der Schaltmuffe Z23 für das erste und das zweite Leistungsverzweigungsgetriebe 30a, 30b separat ansteuerbar.

Wie aus Fig. 1 ersichtlich ist, entspricht die erste Axialstellung der Schaltmuffe Z23 des ersten Leistungsverzweigungsgetriebes 30a dem Vorwärts-Fahrbereich V, während die erste Axialstellung der Schaltmuffe Z23 des zweites Leistungsverzweigungsgetriebes 30b dem Rückwärts-Fahrbereich R entspricht und die beiden Hydroeinheiten in die entsprechenden Richtungen geschwenkt werden. Diese Schaltstellungen mit gegensinniger Drehrichtung bewirken, dass sich beide Ketten in dieselbe Richtung bewegen. Werden beide Leistungsverzweigungsgetriebe 30a, 30b auf V oder R gestellt, kann ein Kettenfahrzeug auf der Stelle drehen.

Für eine Vorwärts- oder Rückwärtsfahrt werden dann entsprechend beide Leistungsverzweigungsgetriebe 30a, 30b über die Schaltmuffen Z23 in den Vorwärts-Fahrtbereich V oder Rückwärts-Fahrbereich R geschalten. Für eine Kurvenfahrt im Vorwärts V - oder Rückwärtsfahrbereich R wird die Drehzahl in einem der beiden Leistungsverzweigungsgetriebe 30a, 30b gegenüber dem anderen erhöht. Dies kann z.B. durch stärkeres Ausschwenken einer Hydroeinheit H1, H2 erreicht werden. Aufgrund der Drehzahldifferenz auf der linken und rechten Seite stellt sich dann eine Kurvenfahrt ein.

Mit einer solchen Getriebeanordnung kann also ein besonders einfacher, kompakter und effizienter Antrieb für Kraftfahrzeuge, insbesondere für Kettenfahrzeuge bereitgestellt werden.

### BEZUGSZEICHENLISTE:

- 1: Getriebeanordnung
- 2: Motorantriebswelle
- 3: Hochdruckkanäle
- 10: Kolben (Verbrennungsmotor)
- 11: Kurbelwelle
- 12: Antriebswelle
- 13: Zapfwelle
- 14: Summierwelle
- 15: Planetenwendegetriebe
- 16: erster, mechanischer Zweig
- 17: Getriebegehäuse
- 18: Planetengetriebeanordnung
- 19: Koppelwelle
- 22: zweiter Zweig: hydraulisch
- 23: Hydrostatwelle
- 24: Kettenantrieb
- 30a: erstes Leistungsverzweigungsgetriebe
- 30b: zweites Leistungsverzweigungsgetriebe
- K1: erste Kupplung
- K2: zweite Kupplung
- K2V/K2R: Doppelklauenkupplung
- HL: hydrostatischer Leistungsanteil
- H: Wirkungsgrad
- V: Vorwärts-Fahrbereich
- R: Rückwärts-Fahrbereich
- VM: Verbrennungsmotor
- K2V: erste geschlossene Stellung der Doppelklauenkupplung für V
- K2R: zweite geschlossene Stellung der Doppelklauenkupplung für R
- H1: erste Hydroeinheit
- H2: zweite Hydroeinheit
- P: Planetensteg
- Z1: erstes Sonnenrad
- Z1': zweites Sonnenrad
- Z2: Doppelplanetenrad
- Z2': Doppelplanetenrad
- Z3: erstes Hohlrad
- Z4: Außenkranzzahnrad
- Z5: Hydroeinheit-Zahnrad
- Z6,Z7: erstes Zahnradvorgelege
- Z7',Z7",Z6',Z6: zweites Zahnradvorgelege
- Z9,Z10: Zahnräder zwischen 23 und K1
- Z11, Z12, Z13: Stirnradsatz
- Z20, Z21, Z22: Wendeplanet
- Z23: Schaltmuffe/Wende-Hohlrad
- Z30,Z31,Z32,Z33: Längsdifferential mit Sperre
- Z40: erstes Kegelrad
- Z41: zweites Kegelrad
- Z42: drittes Kegelrad

## Patentansprüche

1. Getriebeanordnung (1) für ein Kraftfahrzeug, die ein Leistungsverzweigungsgetriebe (30a, 30b) umfasst, wobei das Leistungsverzweigungsgetriebe (30a, 30b) ausgestattet ist
- mit einer Antriebswelle (12),
- mit einem ersten, mechanischen Zweig (16), der eine Planetengetriebeanordnung (18) mit zumindest einem ersten Sonnenrad (Z1) und einem zweiten Sonnenrad (Z1'), einem ersten Hohlrad (Z3) und einem Planetensteg (P) umfasst, auf dem Doppelplanetenräder (Z2, Z2') angeordnet sind, die mit den Sonnenrädern (Z1, Z1') und mit dem ersten Hohlrad (Z3) kämmen, wobei zumindest eines der Sonnenräder (Z1, Z1') mit der Antriebswelle gekoppelt ist,
- mit einem stufenlos verstellbaren zweiten Zweig (22), der zumindest teilweise über die Planetengetriebeanordnung (18) mit dem ersten, mechanischen Zweig (16) verbindbar ist und wenigstens zwei verstellbare Hydroeinheiten (H1, H2) umfasst, die miteinander energetisch koppelbar und in jeweils beide Richtungen als Motor oder Pumpe betreibbar sind, wobei die erste Hydroeinheit (H1) über ein Hydroeinheit-Zahnrad (Z5) und ein Außenkranzzahnrad (Z4) an einem Außenkranz des Hohlrades (Z3) mit diesem Hohlrad (Z3) gekoppelt ist,
- mit einer Summierwelle (14), durch die die Kraft des ersten, mechanischen Zweiges (16) und des zweiten Zweiges (22) koppelbar ist, wobei der Planetengetriebeanordnung (18) ein Planetenwendegetriebe (15) zugeordnet ist, durch das die Drehrichtung des ersten, mechanischen Zweiges (16) umkehrbar ist, **dadurch gekennzeichnet, dass** das Leistungsverzweigungsgetriebe (30a, 30b) zweifach vorhanden ist als erstes Leistungsverzweigungsgetriebe (30a) und als zweites Leistungsverzweigungsgetriebe (30b), wobei jedes Leistungsverzweigungsgetriebe (30a, 30b) separat ansteuerbar ist, und durch jedes der Leistungsverzweigungsgetriebe (30a, 30b) die Kraft von der Summierwelle (14) auf ein dem jeweiligen Leistungsverzweigungsgetriebe (30a, 30b) zugeordnetes Antriebsrad übertragbar ist.

2. Getriebeanordnung (1) nach Anspruch 1, **dadurch gekennzeichnet, dass** das erste Leistungsverzweigungsgetriebe (30a) und das zweite Leistungsverzweigungsgetriebe (30b) jeweils einem Kettenantrieb (24) zugeordnet sind.

3. Getriebeanordnung (1) nach Anspruch 2, **dadurch gekennzeichnet, dass** durch das erste Leistungsverzweigungsgetriebe (30a) eine erste Kette antreibbar ist, und dass durch das zweite Leistungsverzweigungsgetriebe (30b) eine zweite Kette antreibbar ist.

4. Getriebeanordnung (1) nach einem der Ansprüche 1 bis 3, **dadurch gekennzeichnet, dass** die Antriebswellen (12) des ersten und des zweiten Leistungsverzweigungsgetriebes (30a, 30b) über einen Kegelradsatz (Z40, Z41, Z42) mit drei Kegelrädern verbunden sind, wobei eines der Kegelräder (Z40, Z41, Z42) als drittes Kegelrad (Z42) über eine Motorantriebswelle (2) mit einem Motor (VM) verbunden ist.

5. Getriebeanordnung (1) nach einem der Ansprüche 1 bis 4, **dadurch gekennzeichnet, dass** die Drehrichtung des ersten Leistungsverzweigungsgetriebes (30a) gegensinnig zur Drehrichtung des zweiten Leistungsverzweigungsgetriebes (30b) schaltbar ist.

6. Getriebeanordnung (1) nach einem der Ansprüche 1 bis 5, **dadurch gekennzeichnet, dass** die Drehrichtung des ersten und des zweiten Leistungsverzweigungsgetriebe (30a, 30b) durch Schalten der Planetenwendegetriebe (15) umkehrbar ist, wobei jedes Planetenwendegetriebe (15) eine axial verstellbare Schaltmuffe (Z23) aufweist, die in einer ersten Axialstellung die Drehrichtung des Planetensteges (P) direkt auf einen Wendeplaneten (Z20, Z21, Z22) überträgt, der in dem ersten, mechanischen Zweig (16) mit der Summierwelle (14) kraftschlüssig verbunden ist, und die in einer zweiten Axialstellung gegenüber einem Getriebegehäuse (17) des jeweiligen Leistungsverzweigungsgetriebes (30a, 30b) unmittelbar oder mittelbar gegen Verdrehung blockiert ist, sodass die Drehrichtung des Planetensteges (P) in dieser Axialstellung gewendet wird und mit umgedrehten Drehsinn auf die Summierwelle (14) wirkt, über die die Kraft des ersten mechanischen Zweiges (16) und des zweiten hydrostatischen Zweiges (22) zusammengeführt wird.

7. Getriebeanordnung (1) nach Anspruch 6, **dadurch gekennzeichnet, dass** sich, in einem Betriebsmodus, der einer Vorwärtsfahrt entspricht, die Schaltmuffe (Z23) des ersten Leistungsverzweigungsgetriebes (30a), in der ersten Axialstellung befindet und die Schaltmuffe (Z23) des zweiten Leistungsverzweigungsgetriebes (30b) in der zweiten Axialstellung befindet.

8. Getriebeanordnung (1) nach einem der Ansprüche 1 bis 7, **dadurch gekennzeichnet, dass** sich die Antriebswellen (12) des ersten und des zweiten Leistungsverzweigungsgetriebes (30a, 30b) bis zu dem ersten Sonnenrad (Z1) der Planetengetriebeanordnung (18) erstrecken.

9. Getriebeanordnung (1) nach einem der Ansprüche 1 bis 8, **dadurch gekennzeichnet, dass** die Summierwelle (14) durch einen Radsatz (Z11, Z12, Z13) über eine mit einer Kupplung (K1) versehene Koppelwelle (19) mit dem zweiten Zweig (22) koppelbar ist.

10. Getriebeanordnung (1) nach Anspruch 6, **dadurch gekennzeichnet, dass** die Schaltmuffe (Z23) als ein Wende-Hohlrad gebildet ist mit einem Wendeplaneten (Z20, Z21, Z22) mit einer zugeordneten ungeraden Anzahl von Zahnrädern.

11. Getriebeanordnung (1) nach einem der Ansprüche 1 bis 10, **dadurch gekennzeichnet, dass** dem zweiten Zweig (22) eine zweite Kupplung (K2) zugeordnet ist.

12. Getriebeanordnung (1) nach Anspruch 11, **dadurch gekennzeichnet, dass** die zweite Kupplung (K2) einer Hydrostatwelle (23) der zweiten Hydroeinheit (H2) zugeordnet und als Doppelklauenkupplung (K2V/K2R) ausgebildet ist zum Zusammenwirken der zweiten Hydroeinheit (H2) über ein ersten Zahnradvorgelege (Z6, Z7) mit dem kleinen zweiten Sonnenrad (Z1) in der ersten geschlossenen Stellung (K2V) und zum Zusammenwirken über ein zweites Zahnradvorgelege (Z7`, Z7", Z6', Z6) mit dem kleinen zweiten Sonnenrad (Z1) in der zweiten geschlossenen Stellung (K2R).

13. Getriebeanordnung (1) nach Anspruch 4, **dadurch gekennzeichnet, dass** über die Motorantriebswelle (2) Nebenaggregate antreibbar sind.

14. Getriebeanordnung (1) nach einem der Ansprüche 1 bis 13, **dadurch gekennzeichnet, dass** das Planetenwendegetriebe (15) einen ersten Wendeplaneten (Z20) aufweist, der unmittelbar und kraftschlüssig mit der Summierwelle (14) verbunden ist.

15. Kraftfahrzeug mit einer Getriebeanordnung (1) nach einem der Ansprüche 1 bis 14.
